# DEMANDE DE BREVET EUROPEEN

(11) **EP 1 247 708 A1**
(43) Date de publication de la demande: **09.10.2002**
(21) Numéro de dépôt: 02290693.7
(22) Date de dépôt: 19.03.2002
(51) Int. Cl.: B60T 1/00

(54) **Dispositif d'immobilisation d'un véhicule automobile en stationnement**

(30) Priorité: 06.04.2001 FR 0104742
(71) Demandeur: Peugeot Citroen Automobiles SA, 92200 Neuilly sur Seine (FR)
(72) Inventeur: Lalu, Daniel, 77240 Cesson-la-Foret (FR)
(74) Mandataire: Jacobson, Claude

(57) **Abrégé**

Ce dispositif (8) d'immobilisation d'un véhicule automobile (2) en stationnement, ledit véhicule comportant au moins un moteur (10) d'entraînement de roues motrices du véhicule équipé d'au moins un arbre (16) de sortie rotatif adapté pour être mis en prise avec des roues motrices par l'intermédiaire de moyens de transmission de puissance et associé à une couronne (18), caractérisé en ce qu'il comporte des moyens de blocage en rotation de ladite couronne déplaçables entre une première position escamotée de déblocage et une seconde position active de blocage de celle-ci, lorsque le véhicule est stationné afin d'immobiliser celui-ci, sous le contrôle de moyens de commande (6).

## Description

La présente invention concerne d'une manière générale un dispositif d'immobilisation d'un véhicule automobile en stationnement et plus particulièrement un dispositif d'immobilisation d'un véhicule automobile à moteur thermique équipé de soupapes à commande électrique.

Actuellement, des véhicules automobiles sont équipés de deux dispositifs d'immobilisation en stationnement.

Le premier dispositif connu sous le nom de « frein à main », consiste à bloquer par des moyens mécaniques classiques au moins une roue du véhicule.

Le second dispositif d'immobilisation met en oeuvre le moteur thermique d'entraînement des roues motrices du véhicule.

Ce moteur thermique comporte de façon classique plusieurs chambres de combustion formées par un cylindre, une culasse et un piston et associées à des soupapes d'admission et d'échappement. De façon classique également, le déplacement des soupapes est commandé par des cames d'un arbre à cames du moteur, de sorte que quelle que soit la position de cet arbre, il existe toujours une chambre de combustion hermétiquement fermée par des soupapes que le moteur soit en marche ou au repos. Par conséquent, au repos, le gaz contenu dans une chambre de combustion hermétiquement fermée par des soupapes exerce une force de rappel sur le piston correspondant à la manière d'un ressort, de telle sorte que celui-ci est pratiquement immobilisé à l'intérieur du cylindre. Il est donc relativement difficile de faire tourner l'arbre de sortie d'un tel moteur thermique classique lorsque celui-ci est au repos puisque au moins l'un de ses pistons est pratiquement immobilisé en position dans le cylindre correspondant.

Le second dispositif d'immobilisation en stationnement d'un véhicule, équipé d'un moteur thermique classique, consiste donc à enclencher un rapport de vitesse lorsque le véhicule est stationné pour mettre en prise l'arbre de sortie du moteur avec les roues motrices du véhicule par l'intermédiaire de moyens de transmission de puissance. On conçoit dès lors qu'il est difficile de déplacer un véhicule dans ces conditions et que cette caractéristique peut être exploitée comme frein additionnel au frein à main.

Toutefois, de nouveaux systèmes de commande du déplacement des soupapes des moteurs à combustion interne ont été développés permettant de s'affranchir de l'arbre à cames de commande des soupapes. Par exemple ; il existe des systèmes de commande de déplacement des soupapes comportant des actionneurs électromagnétiques. Un tel actionneur électromagnétique de soupape comporte généralement deux électro-aimants entre lesquels est ménagé un entrefer. Dans l'entrefer est montée une palette magnétique reliée à la soupape à actionner, déplaçable par les électro-aimants à l'encontre de l'action de ressorts de stockage d'énergie. Au repos, les ressorts de stockage d'énergie ramènent la palette au milieu de l'entrefer de sorte que toutes les chambres du moteur sont à la pression atmosphérique. En conçoit donc que pour les véhicules équipés d'actionneurs de soupapes tel que des actionneurs électromagnétiques de soupapes il n'est plus possible d'utiliser le moteur comme source de frein additionnel.

La présente invention vise à remédier à cet inconvénient en proposant un dispositif d'immobilisation d'un véhicule automobile en stationnement indépendant du système d'actionnement des soupapes du moteur à combustion utilisé.

Elle a donc pour objet un dispositif d'immobilisation d'un véhicule automobile en stationnement, ledit véhicule comportant au moins un moteur d'entraînement de roues motrices du véhicule équipé d'au moins un arbre de sortie rotatif adapté pour être mis en prise avec un arbre d'entraînement des roues motrices et associé à une couronne, caractérisé en ce qu'il comporte des moyens de blocage en rotation de ladite couronne déplaçables entre une première position escamotée de déblocage et une seconde position active de blocage de celle-ci, lorsque le véhicule est stationné afin d'immobiliser celui-ci, sous le contrôle de moyens de commande.

Suivant d'autres caractéristiques de l'invention ;
- la couronne est formée par une couronne de démarreur, ou volant moteur, du véhicule ;
- la couronne présente à sa périphérie, des parties en saillie et en creux successives adaptées pour coopérer avec une tige des moyens de blocage associée à des moyens de déplacement de celle-ci entre une position active dans laquelle la tige coopère avec les parties en saillie et en creux de la couronne, et une position escamotée dans laquelle la couronne est débloquée en rotation ;
- les moyens pour déplacer la tige comportent des moyens élastiques exerçant sur la tige une force de rappel pour solliciter celle-ci en position active, et des moyens électromagnétiques exerçant sur la tige une force destinée à déplacer cette tige jusqu'à sa position escamotée ;
- les moyens électromagnétiques comportent une palette aimantée 66 solidaire de la tige et un électroaimant relié au véhicule ;
- les moyens de blocage sont intégrés dans le démarreur ;
- pour immobiliser un véhicule automobile comprenant une boîte de vitesses associée par l'intermédiaire d'un mécanisme d'embrayage audit arbre de sortie du moteur, les moyens de blocage sont intégrés à ladite boîte de vitesses ;
- le véhicule comporte un capteur de régime de rotation du moteur, raccordé aux moyens de commande, pour activer les moyens de blocage lorsque le moteur est arrêté ;
- les moyens de commande sont raccordés à des moyens d'activation du moteur du véhicule pour déplacer les moyens de blocage vers leur position escamotée à la mise du contact du véhicule ; et
- ledit moteur est formé par un moteur thermique équipé de soupapes à commande électromagnétique

L'invention sera mieux comprise à la lecture de la description qui va suivre donnée uniquement à titre d'exemple et faite en se référant aux dessins annexés sur lesquels :
- la figure 1 représente une vue schématique d'un véhicule équipé d'un dispositif d'immobilisation de celui-ci en stationnement conforme à l'invention ;
- la figure 2 représente schématiquement un exemple de réalisation d'un dispositif d'immobilisation conforme à l'invention ; et
- la figure 3 représente un chronogramme des différents signaux de commande et d'état d'un véhicule équipé d'un dispositif d'immobilisation conforme à l'invention selon l'invention.

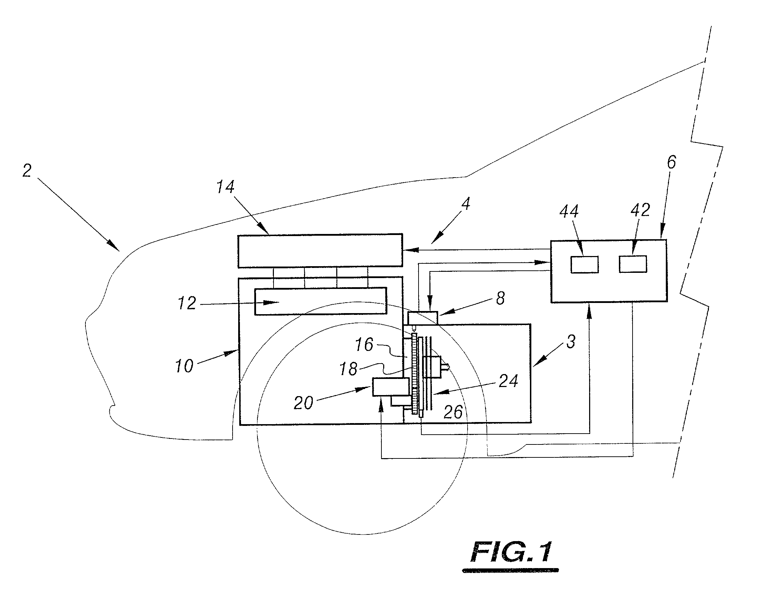

La figure 1 représente un véhicule automobile 2 comportant un ensemble moteur 4 commandé par des moyens de commande 6 et équipé d'un dispositif 8 d'immobilisation en stationnement conforme à l'invention.

L'ensemble moteur 4 comprend un moteur thermique 10 équipé d'actionneurs 12 de soupapes électromagnétiques commandés par un calculateur 14 de contrôle. Le moteur 10 comprend un arbre de sortie 16 associé à une couronne dentée 18 de démarreur ou volant moteur destinée à coopérer lors du démarrage du moteur du véhicule 2 avec un pignon d'un démarreur 20. L'arbre de sortie 16 du moteur 10 est adapté pour être mis en prise avec des roues motrices du véhicule par l'intermédiaire de moyens de transmission de puissance comportant en outre un mécanisme d'embrayage 24 équipé d'un capteur 26 de régime de rotation du moteur, et d'une boîte de vitesses 32.

Le dispositif d'immobilisation 8 est associé à la partie supérieure de la boîte de vitesses 32 et est déposé à proximité de la couronne 18 pour que celui-ci puisse agir sur celle-ci lorsqu'il est en position active.

On notera qu'en variante le dispositif d'immobilisation 8 peut être intégré à la boîte de vitesses 32 ou au démarreur 20.

Les moyens de commande 6 sont raccordés de façon classique en entrée du calculateur 14 de commande de soupapes, et du démarreur 20, et en sortie du capteur 26 de régime de rotation du moteur et d'un capteur 34 de position de clé de contact du véhicule. Ces moyens 6 sont également raccordés au dispositif d'immobilisation 8. Ces moyens de commande 6 sont réalisés de façon classique par exemple à l'aide d'un microcontrôleur associé à des mémoires destinées à stocker un algorithme de commande des différents éléments de l'ensemble moteur 4 et du dispositif d'immobilisation 8 du véhicule.

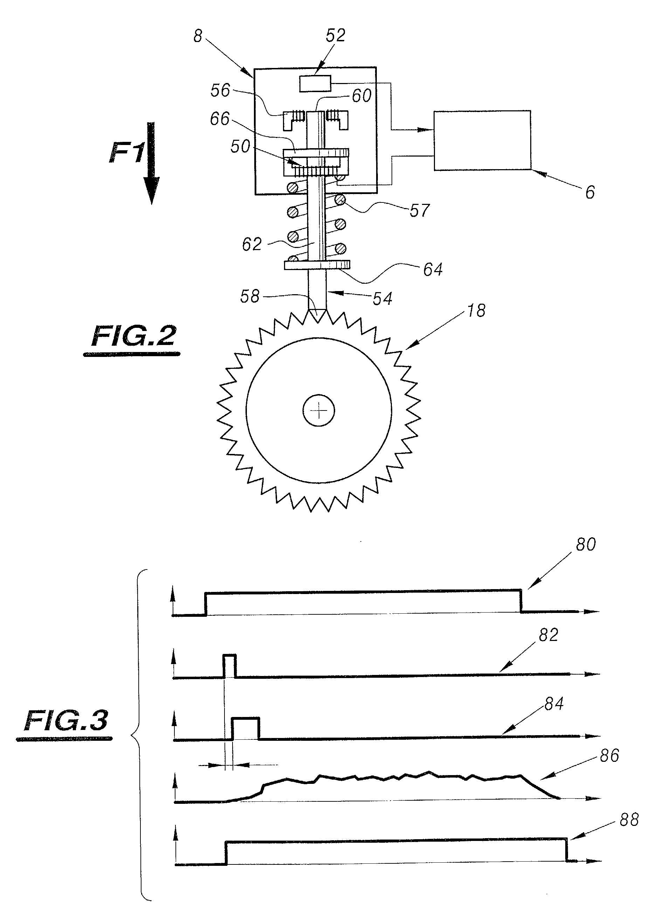

La figure 2 représente un exemple de réalisation d'un dispositif d'immobilisation 8 d'un véhicule selon l'invention. Celui-ci comporte des moyens de blocage 50 et un détecteur 52 de positions du dispositif d'immobilisation. Les moyens de blocage 50 se composent d'une tige 54 déplaçable entre une position active de blocage de la couronne 18 illustrée sur la figure 2 et un position escamotée de déblocage de cette couronne 18, sous l'action d'un actionneur électromagnétique 56 et/ou d'un ressort hélicoïdal 57.

La tige 54 comporte deux extrémités 58 et 60 reliées par l'intermédiaire d'une partie centrale 62. L'extrémité 58, en forme de pointe, est apte à coopérer avec les dents de la couronne 18 de démarreur afin de bloquer celle-ci en rotation. L'extrémité 60 est destinée à coopérer avec le détecteur 52 lorsque la tige 54 est en position escamotée pour permettre une détection de position escamotée de cette tige. La partie centrale 62 de la tige 54 se compose d'une première partie montée axialement déplaçable à l'intérieur de l'actionneur électromagnétique 56 et d'une seconde partie située à l'extérieur de l'actionneur 56 et reliée à l'extrémité 58 de cette tige. La première partie de la tige 54 est, par exemple, solidaire d'une palette magnétique 66 axialement déplaçable à l'intérieur d'un entrefer d'un électro-aimant de l'actionneur électromagnétique 56 entre une première position dans laquelle l'extrémité 60 de la tige 54 est pratiquement en contact avec le détecteur 52 de position escamotée, et une seconde position dans laquelle l'extrémité 58 de la tige coopère avec les dents de la couronne 18. La seconde partie de la tige 54 comporte une butée 64 destinée à servir de surface d'appui au ressort 57 interposé entre cette butée et une surface d'appui correspondante de l'actionneur électromagnétique 56 de façon à exercer une force de rappel sur la tige 54 en direction de la flèche F1, c'est-à-dire en direction de sa position active de blocage de la couronne 18. La force de rappel du ressort est inférieure à la force de traction exercée par l'actionneur électromagnétique 56 lorsque celui-ci est alimenté de sorte que l'on peut déplacer la tige à l'encontre de l'action du ressort 57.

L'actionneur électromagnétique 56 est raccordé de façon classique en sortie des moyens de commande 6 tandis que le détecteur 52 de position escamotée est raccordé en entrée de ceux-ci.

On remarquera que le dispositif d'immobilisation décrit en regard de la figure 2 peut être remplacé par tout autre dispositif apte à bloquer la couronne 18 sous le contrôle de moyens de commande.

La figure 3 représente cinq chronogrammes 80, 82, 84, 86 et 88 destinés à illustrer un exemple d'évolution au cours du temps, de signaux d'information pertinents pour le fonctionnement d'un dispositif d'immobilisation d'un véhicule conforme à l'invention.

Le chronogramme 80 représente schématiquement l'évolution au cours du temps d'un signal transmis aux moyens de commande 6 par le capteur 34 de positions de clé de contact du véhicule 2. Ce signal est nul tant que la clé de contact est dans une position dans laquelle la mise sous tension des différents organes du véhicule 2 n'est pas commandée par le conducteur. Il passe ensuite brusquement à une valeur non nulle lorsque la clé de contact est déplacée par le conducteur vers une position active dans laquelle l'ensemble des organes du véhicule 2 est mis sous tension et demeure à cette valeur non nulle tant que la clé de contact n'est pas ramenée à sa position initiale, c'est-à-dire, tant qu'une commande d'arrêt du moteur n'est pas engendrée.

Le chronogramme 82 représente l'évolution au cours du temps d'un signal de commande de démarrage du moteur 10. Ce signal est nul tant qu'aucune commande de démarrage n'est engendrée. Il passe ensuite brusquement à une valeur non nulle pendant un cours laps de temps lorsqu'une commande de démarrage est engendrée. Une telle commande peut être produite, par exemple, à l'aide d'une troisième position de la clé de contact et transmise aux moyens de commande 6 par le capteur 34 de position de clé de contact. Une commande de démarrage ne peut être engendrée que si l'ensemble des organes du véhicule 2 est sous tension.

Le chronogramme 84 représente l'évolution d'un signal de commande d'activation du démarreur 20. Ce signal est nul tant qu'aucune commande d'activation n'est envoyée au démarreur. Ce signal présente un front montant retardé, par exemple de 30 milli-secondes, par rapport au front montant de la commande d'activation du moteur. Il se maintient alors pendant une courte période de temps à une valeur non nulle avant de redescendre brusquement lors d'un front descendant à une valeur nulle indiquant par là que le démarreur 20 doit être désactivé.

Le chronogramme 86 illustre schématiquement l'évolution d'un signal transmis par le capteur 26 de régime de rotation du moteur au cours du temps. On notera que ce signal est nul tant que le régime de rotation du moteur est nul. On constate que ce signal commence à augmenter vers des valeurs non nulles pratiquement simultanément avec le front montant de la commande d'activation du démarreur 20. Le signal évolue par la suite de façon proportionnelle au régime de rotation du moteur pour finalement commencer à décroître vers des valeurs nulles pratiquement en même temps que le front descendant du signal de position de la clé de contact. Dès lors le signal continue à décroître progressivement jusqu'à une valeur nulle.

Le chronogramme 88 représente schématiquement l'évolution au cours du temps d'un exemple de signal de commande du dispositif d'immobilisation 8. Ce signal est nul tant qu'aucune commande de déblocage du dispositif d'immobilisation 8 n'est envoyée par les moyens de commande 6. Dans le cas contraire il passe brusquement à une valeur non nulle et demeure à cette valeur tant que le dispositif d'immobilisation 8 doit être maintenu dans sa position escamotée. On notera que le front montant du signal de commande de déblocage du dispositif d'immobilisation 8 est pratiquement simultané à celui du signal de commande d'activation du moteur 10 et que le front descendant se produit après que le régime de rotation du moteur détecté par le capteur 26 est redevenu nul.

Le fonctionnement du dispositif d'immobilisation d'un véhicule en stationnement va maintenant être décrit à l'aide des figures 1 à 3.

En position de stationnement, le moteur 10 du véhicule 2 est arrêté, les moyens de commande 6 ne sont pas alimentés et l'extrémité 58 de la tige 54 du dispositif d'immobilisation 8 coopère avec les dents de la couronne 18 afin de bloquer en rotation l'arbre 16 de sortie du moteur 10. L'extrémité 58 de la tige est maintenue dans cette position sans nécessiter aucune alimentation électrique par le ressort 57 qui exerce une force de rappel sur la butée 64 de cette tige 54. Dans ces conditions si un rapport de vitesse est enclenché, par exemple le premier rapport de vitesse, les roues motrices du véhicule sont en prise avec l'arbre de sortie 16 du moteur 10 par l'intermédiaire des moyens de transmission de puissance et ne peuvent donc pas tourner, puisque l'arbre 16 est bloqué en rotation par la tige 54. Ainsi le dispositif 8 lorsqu'il est en position active de blocage entraîne l'immobilisation du véhicule en stationnement.

Si l'on exerce une force de poussée pour déplacer le véhicule, au moins une dent de la couronne 18 coopérant avec l'extrémité 58 de la tige 54 exerce une force de poussée sur cette extrémité 58 dans une direction opposée à la flèche F1. Si la force de poussée sur le véhicule en stationnement atteint un seuil suffisant, appelé F0, la force exercée par la dent coopérant avec l'extrémité 58 est suffisante pour repousser la tige 54 à l'encontre de l'action du ressort 57 et dégager ainsi l'extrémité 58 de la couronne dentée 18. On obtient ainsi un déblocage en rotation de la couronne 18 si la force de poussée sur le véhicule est supérieure à F0 permettant d'éviter que des pièces du véhicule soient soumises à des contraintes mécaniques trop fortes et donc toute détérioration de celles-ci.

Lorsque le conducteur déplace la clé de contact du véhicule vers sa position active, les moyens de commande 6 ainsi que l'ensemble des organes du véhicule sont mis sous tension. Ensuite, le conducteur engendre un signal de commande d'activation du moteur, tel que le signal du chronogramme 82, qui est transmis aux moyens de commande 6. A la réception de ce signal de commande d'activation du moteur 10, les moyens de commande 6 engendrent un signal de commande de déblocage du dispositif d'immobilisation 8 comme illustré sur le chronogramme 88. Dès la réception de ce signal, l'actionneur électromagnétique 56 du dispositif d'immobilisation 8 est activé et exerce une force de traction dans la direction opposée à F1 sur la tige 54. Cette force étant supérieure à la force de rappel du ressort 57, la tige 54 se déplace dans la direction opposée à F1 jusqu'à ce que l'extrémité 60 de la tige soit pratiquement en contact avec le détecteur 52 de position escamotée. Le signal de commande de déblocage du dispositif d'immobilisation 8 demeure présent tant que l'arrêt du moteur 10 n'est pas commandé.

Lorsque le détecteur 52 détecte la présence de l'extrémité 60 de la tige 54, il délivre aux moyens de commande 6 un signal indiquant que le dispositif d'immobilisation 8 est en position escamotée. Ces moyens de commande transmettent alors au démarreur 20 un signal de commande d'activation du démarreur comme illustré sur le chronogramme 84. A la réception de ce signal, le pignon du démarreur 20 engrène la couronne 18 et l'entraîne en rotation pour mettre en route le moteur 10.

Après une manoeuvre de stationnement, le conducteur génère un signal de commande d'arrêt du moteur 10 à l'aide de la clé de contact. Ce signal est transmis aux moyens de commande 6. A la réception de ce signal, les moyens de commande 6 commandent l'arrêt du moteur 10 par l'intermédiaire du calculateur 14. Le régime de rotation du moteur décroît alors progressivement vers une valeur nulle. Dès que le capteur 26 de régime de rotation du moteur indique que celui-ci est nul aux moyens de commande 6, ces derniers arrêtent de transmettre le signal de déblocage du dispositif d'immobilisation 8. Par conséquent, la tige 54 sous l'action du ressort 57 se déplace dans la direction de la flèche F1 et l'extrémité 58 de cette tige coopère avec les dents de la couronne 18 pour bloquer celle-ci en rotation. Le véhicule est ainsi de nouveau immobilisé en stationnement si le conducteur a pris la précaution d'enclencher un rapport de vitesse.

En variante, un dispositif d'immobilisation tel que le dispositif d'immobilisation 8 peut être intégré au démarreur ou alternativement à la boîte de vitesses.

Dans une autre variante, il est également possible d'équiper l'arbre de sortie du moteur 10 d'une couronne supplémentaire et de remplacer le dispositif d'immobilisation 8 par un dispositif similaire mais agissant sur la couronne supplémentaire. Cette variante permet ainsi de ne pas utiliser la couronne de démarreur.

Il va de soi que d'autres modes de réalisation en particulier de la couronne peuvent être envisagés et que la périphérie de celle-ci peut comprendre des parties en saillie et en creux successives de formes différentes de celles décrites.

## Revendications

1. Dispositif (8) d'immobilisation d'un véhicule automobile (2) en stationnement, ledit véhicule comportant au moins un moteur (10) d'entraînement de roues motrices du véhicule équipé d'au moins un arbre (16) de sortie rotatif adapté pour être mis en prise avec des roues motrices par l'intermédiaire de moyens de transmission de puissance et associé à une couronne (18), **caractérisé en ce qu'**il comporte des moyens (50) de blocage en rotation de ladite couronne déplaçables entre une première position escamotée de déblocage et une seconde position active de blocage de celle-ci, lorsque le véhicule est stationné afin d'immobiliser celui-ci, sous le contrôle de moyens de commande (6), et **en ce que** ledit moteur (10) est formé par un moteur thermique équipé de soupapes à commande électromagnétique.

2. Dispositif selon la revendication 1, **caractérisé en ce que** la couronne (18) est formée par une couronne de démarreur du véhicule.

3. Dispositif selon l'une quelconque des revendications précédentes, **caractérisé en ce que** la couronne (18) présente à sa périphérie, des parties en saillie et en creux successives adaptées pour coopérer avec une tige (54) des moyens (50) de blocage associée à des moyens (56, 57) de déplacement de celle-ci entre une position active dans laquelle la tige coopère avec les parties en saillie et en creux de la couronne, et une position escamotée dans laquelle la couronne est débloquée en rotation.

4. Dispositif selon la revendication 3, **caractérisé en ce que** les moyens (56, 57) pour déplacer la tige (54) comportent des moyens élastiques (57) exerçant sur la tige une force de rappel pour solliciter celle-ci en position active, et des moyens électromagnétiques (56) exerçant sur la tige une force destinée à déplacer cette tige jusqu'à sa position escamotée.

5. Dispositif selon la revendication 4, **caractérisé en ce que** les moyens électromagnétiques (56) comportent une palette magnétique (66) solidaire de la tige (54) et un électroaimant relié au véhicule.

6. Dispositif selon l'une quelconque des revendications précédentes, **caractérisé en ce que** les moyens de blocage (50) sont intégrés dans le démarreur (20).

7. Dispositif selon l'une quelconque des revendications 1 à 5, pour immobiliser un véhicule automobile dont les moyens de transmission de puissance comprennent une boîte de vitesses (32), **caractérisé en ce que** les moyens de blocage (50) sont intégrés à ladite boîte de vitesses.

8. Dispositif selon l'une quelconque des revendications précédentes, **caractérisé en ce que** le véhicule comporte un capteur (26) de régime de rotation du moteur (10), raccordé aux moyens de commande (6), pour activer les moyens de blocage (50) lorsque le moteur est arrêté.

9. Dispositif selon l'une quelconque des revendications précédentes, **caractérisé en ce que** les moyens de commande (6) sont raccordés à des moyens d'activation (14, 6, 34) du moteur du véhicule pour déplacer les moyens de blocage (50) vers leur position escamotée à la mise du contact du véhicule.
